(19) Europäisches Patentamt
European Patent Office
Office européen des brevets

(11) **EP 1 014 052 B1**

(12) **EUROPÄISCHE PATENTSCHRIFT**

(45) Veröffentlichungstag und Bekanntmachung des Hinweises auf die Patenterteilung:
**30.11.2005   Patentblatt 2005/48**

(51) Int Cl.⁷: **G01G 19/414**, G07B 17/00

(21) Anmeldenummer: **99250421.7**

(22) Anmeldetag: **29.11.1999**

(54) **Verfahren und Anordnung zum Bestimmen eines Gewichtes mit einer dynamischen Waage**

Method and device for determining the weight with a dynamic weighing apparatus

Méthode et dispositif pour déterminer un poids avec une balance dynamique

(84) Benannte Vertragsstaaten:
**CH DE FR GB IT LI**

(30) Priorität: **18.12.1998   DE 19860294**

(43) Veröffentlichungstag der Anmeldung:
**28.06.2000   Patentblatt 2000/26**

(73) Patentinhaber: **Francotyp-Postalia AG & Co. KG**
**16547 Birkenwerder (DE)**

(72) Erfinder:
• **Hübler, Uwe**
  **12627 Berlin (DE)**
• **Kunde, Christoph**
  **13469 Berlin (DE)**

(56) Entgegenhaltungen:
**FR-A- 2 700 042          GB-A- 2 195 460**

**Beschreibung**

Die Erfindung betrifft ein Verfahren zum Bestimmen eines Gewichtes mit einer dynamischen Waage, gemäß des Oberbegriffs des Anspruchs 1 und eine Anordnung zur Durchführung des Verfahrens gemäß des Oberbegriffs des Anspruchs 11. Die Lösung bezweckt insbesondere die schnelle Mischpostverarbeitung in einer Frankiereinrichtung. Das Verfahren ist für Anwender von Postverarbeitungssystemen mit einer dynamischen Waage und portoberechnenden Frankiermaschine bzw. mit dynamischen Portorechnerwaagen und Frankiereinrichtungen geeignet.

Eine digitale Waage ist aus der DE 37 35 036 C1 bekannt, bei der das analoge Ausgangssignal einer Wägezelle in einem Analog/Digital-Wandler in ein digitales Signal umgewandelt wird. Ein Mikroprozessor vergleicht letzteres mit einem Nullwert, um das Gewicht abzuleiten.

Aus der US 4,956,782 und der GB 22 35 656 A ist ein halbdynamisches Wiegen bekannt. Die stromaufwärts angeordnete Benutzerstation kann eine Waage sein und die stromabwärts angeordnete Benutzerstation ist eine Frankiermaschine. Für die zur Gewichtsbestimmung erforderliche Meßzeit muß ein kontinuierlich bewegtes Poststück vollständig von der Waage aufgenommen werden. Bei Mischpost ist die Wahrscheinlichkeit größer, daß die Waage ein falsches Meßergebnis ermittelt hat. In Abhängigkeit von den Abmaßen des Briefes wird Meßzeit erhöht. Alternativ könnte zwar die Wiegelänge erhöht und ein Aussteuerfach angeordnet werden. Das würde jedoch die Länge des gesamten Postverarbeitungssystems erhöhen, was ohne eine größere Umrüstung jedoch nicht möglich ist. Wenn also falsch gemessene Briefe nicht ausgesteuert werden sollen, muß die Transportsgeschwindigkeit der Briefe auf der Waage verringert werden. Dazu sind eine komplizierte Steuerung und steuerbare Motoren erforderlich.

Gemäß der EP 514 107 B1 wird von einer Steuereinrichtung bei großen und schwer zu wiegenden Poststücken der Transport solange unterbrochen, bis die Messung stabil ist. In der Waage ist nahe dem stromabwärts gerichteten Transportbandende ein Detektor angeordnet, welchen nur Briefe durchlaufen, für die deren Gewicht bis zu diesem Zeitpunkt bestimmt worden ist. Bei ungleich verteilter Masse im Brief und hoher Transportgeschwindigkeit treten Meßfehler auf. Außerdem kann bei einem Stop der Brief durch seine Massenträgheit vom Wiegeteller rutschen. Deshalb sind die Abmaße des Wiegetellers etwas größer ausgelegt bzw. die Transportgeschwindigkeit kleiner festgelegt. Der Durchsatz bei Mischpost ist entsprechend verringert.

Aus der DE OS 37 31 494 (US 4,753,432) ist es bekannt, zum Wiegen eine Ruhezeit zu schaffen, wobei der Betrieb des Frankiersystems und des Transportsystems unterbrochen werden, weil letztere sonst eine zu hohe Vibration liefern würden. Die Transportzeit vom Waagemodul zur Frankiermaschine ist zwar klein gewählt. Aber einerseits kann die Geschwindigkeit nicht beliebig vergrößert werden, um die Staugefahr nicht zu vergrößern. Andererseits ist die erzielbare Taktleistung durch in den Ablauf eingefügte Pausen begrenzt. Die Geschwindigkeit des Wiegens ist durch die Geschwindigkeit der Gewichtsbestimmung begrenzt. Letztere bereitet bei schweren Poststücken einen größeren Aufwand, wenn die Messung genau sein muß.

Aus der DE OS 37 31 508 (US 4,787,048) ist es bekannt, beim Wiegen eine Gewichtsabschätzung vorzunehmen. Von den gewichtsabgestuften Portogebührentabellen ausgehend, wird zuerst zu einer der Gewichtsstufen eine erste Annäherung vorgenommen und dann wird deren Abstand zu einer nächsten Annäherung bestimmt. Ist der Abstand ausreichend groß, dann kann diese erste Annäherung verwendet werden, um die Portogebühr zu bestimmen.

Es ist bereits ein Verfahren zum dynamischen Wiegen bekannt, mit Auswertung aufeinanderfolgender Maxima, wobei der Gewichtswert aus einer Differenz aus dem ersten Maximum und dem Quotienten aus der Differenz aus dem ersten Maximum und dem zweiten Maximum mit einem Wert gebildet wird, wobei der Wert von der systemeigenen Dämpfung und der Periodendauer abhängig ist (Lit.: Göldner, Hans: Leitfaden der Technischen Mechanik: Statistik, Festigkeitslehre; Kinematik, Dynamik, Kapitel 6.2.2. Freie Schwingungen gedämpfter Systeme, Seiten 599 bis 606, VEB Fachbuchverlag Leipzig 1986, neubearbeitete 9. Auflage). Nachteilig ist dabei, daß mindestens die halbe Periode einer möglichst harmonisch abklingenden Schwingung abgewartet werden muß. Da die Kurvenform in der Praxis aber nicht immer ideal ist, kann die tatsächliche Periodendauer erst nach mehreren Perioden abgeleitet werden. Bei nicht ideal verlaufenden Meßkurven besteht eine hohe Meßunsicherheit.

Im Stand der Technik ist auch ein Verfahren und eine Vorrichtung zum Wiegen von Poststücken bekannt. So wird in dem GB-A-2 195 460 eine Postwaage mit einer verbesserten Ansprechzeit zur Bestimmung der richtigen Postgebühren und mit einem verbesserten Wiegealgorithmus beschrieben.

Alle vorgenannten Lösungen haben keine Möglichkeit zur Anpassung an ein Postverarbeitungssystem, welches mit einem höheren Durchsatz an Poststücken arbeitet. Durch die unterschiedliche Transportgeschwindigkeit ist eine verändertes Verhalten des Poststückes während des Transportes über die Wiegeeinrichtung feststellbar. Das Poststück verformt sich an den Kanten impulsabhängig stärker, Luftpolster werden anders ausgebildet, Stöße werden später auf die Wiegeeinrichtung aufgebracht. Aufgrund der Massenträgheit fliegt ein Poststück länger, nach einer Übergabe aus einer Zuführungseinrichtung, wenn die Zuführung nicht exakt erfolgt. Somit ergibt sich im Ergebnis eine andere Kurvenform der Meßkurve für die Wiegemeßwerte und bei höherer Transportgeschwindigkeit stehen weniger Wiegemeßwerte zur Verfügung bei gleicher Baulänge der Waage.

Es war die Aufgabe zu lösen, die Nachteile des Standes der Technik zu überwinden und ein Verfahren zum Bestimmen eines Gewichtes mit einer dynamischen Waage zu schaffen.

Eine weitere Aufgabe war es, eine rechenzeitoptimierte parametergesteuerte Wiegewertauswertung vorzunehmen, wenn die dynamische Waage an ein System mit einer anderen, insbesondere höheren Transportgeschwindigkeit angepaßt werden soll.

Die Aufgabe wird mit den Merkmalen des Verfahrens nach Anspruch 1 und mit den Merkmalen einer Anordnung nach Anspruch 11 gelöst.

Erfindungsgemäß erfolgt die Auswertung des Wiegemeßergebnisses mit dem Ziel gleichzeitig genau und geschwindigkeitsoptimal zu arbeiten. In der Waage erfolgt ständig eine Abgabe von Meßwerten von der Wiegezelle und deren Speicherung in einem Speicherbereich eines Speichers. Ein erster Parameter gibt die Stellenanzahl an Speicherzellen im Speicher für die Meßwerte vor. Die Speicherzellen im Speicherbereich werden soft- oder hardwaremäßig als Schieberegister für einen Mikroprozessor verschaltet. Der Mikroprozessor ist programmiert, beim Eingang der Meßwerte eine Sortierung nach ihrer Größe vorzunehmen und in die entsprechend dafür vorgesehenen Stellen des Schieberegisters einzuspeichern.

Ein Meßzeitintervall endet, wenn eine Briefvorderkante am Briefauslauf von einem Sensor erkannt wird. In den Speicherbereichen eines nichtflüchtigen Speichers sind Anfangswerte und Parameter für die Auswertung der Meßwerte gespeichert. Zur Auswertung wird von den der Größe nach sortierten Meßwerten in einem Rechenzeitintervall zunächst ein mittlerer Meßwert ausgewählt und mit den Grenzwerten für einzelne Meßbereiche verglichen, wobei der Überschreitung des größten Grenzwertes ein Überlastfehler signalisiert wird und wobei bei Unterschreitung der Grenzwerte geprüft wird, ob der Differenzwert des kleinsten von dem größten Meßwert in einem vorbestimmten Bereich liegt, dessen Bandbreite der zulässigen Schwingung dem mit einem bestimmten Gewicht belasteten Wiegeteller entspricht, wobei die Messung ungültig ist, wenn der Differenzwert größer als die Bandbreite ist, sowie daß nach Prüfung der Gültigkeit der Messung eine Korrektur des Wiegewertes mit einem Offsetwert und einem Wertekorrekturfaktor durchgeführt wird und eine Übergabe eines korrigierten Wiegewertes an die Frankiermaschine erfolgt. Das Verfahren zum Bestimmen eines Gewichtes mit einer dynamischen Waage wird an andere Transportgeschwindigkeiten angepaßt, indem ein dem Gewicht des Poststückes entsprechender Wiegemeßwert bestimmt, zu jeder Zeit die Transportgeschwindigkkeit mittels eines geeigneten Sensors gemessen und ein Parametersatz entsprechend einem aus einer Vielzahl an Transportgeschwindigkeitsbereichen für die Auswertung des Wiegemeßergebnisses vorgeben wird. Durch eine Interpolation von Parametersätzen bei Zwischengeschwindigkeiten wird eine noch bessere Anpassung erreicht.

Die Waage umfaßt eine Transporteinrichtung, einen Wiegeteller, eine Wiegezelle, Sensoren, Schnittstellen sowie eine elektronische Steuereinheit, welche neben einer Steuerung der Transporteinrichtung eine Auswertung der von der Wiegezelle übermittelten Meßwerte, die Meßwertkorrektur anhand bestimmter Parameter erlaubt und die Ausgabe eines korrigierten Gewichtswertes über eine Schnittstelle an die Frankiermaschine durchführt sowie welche anderenfalls den Antrieb der Transporteinrichtung umschaltet, um ein Nachwiegen vornehmen zu können.

Vorteilhafte Weiterbildungen der Erfindung sind in den abhängigen Ansprüche gekennzeichnet bzw. werden nachstehend zusammen mit der Beschreibung der bevorzugten Ausführung der Erfindung anhand der Figuren näher dargestellt. Es zeigen:

Figur 1, Perspektivische Ansicht einer dynamischen Waage von vorn rechts,

Figur 2, Blockschaltbild der Steuerung einer dynamischen Waage,

Figur 3, Darstellung von Briefpositionen im Briefstrom relativ zum Wiegeteller beim dynamischen Wiegen,

Figur 4, Zeitdiagramm über das Einschwingen der Waage,

Figur 5, Darstellung von sortierten Gewichtswerten,

Figur 6, Flußdiagramm für die Steuerung der Waage,

Figur 7, Teilablaufplan Sortieren,

Figur 8, Teilablaufplan Überlast und Abschaltkriterium,

Figur 9, Zeitdiagramm über das Einschwingen der Waage bei drei verschiedenen Poststückgewichten,

Figur 10, Teilablaufplan Wiegewertbestimmung.

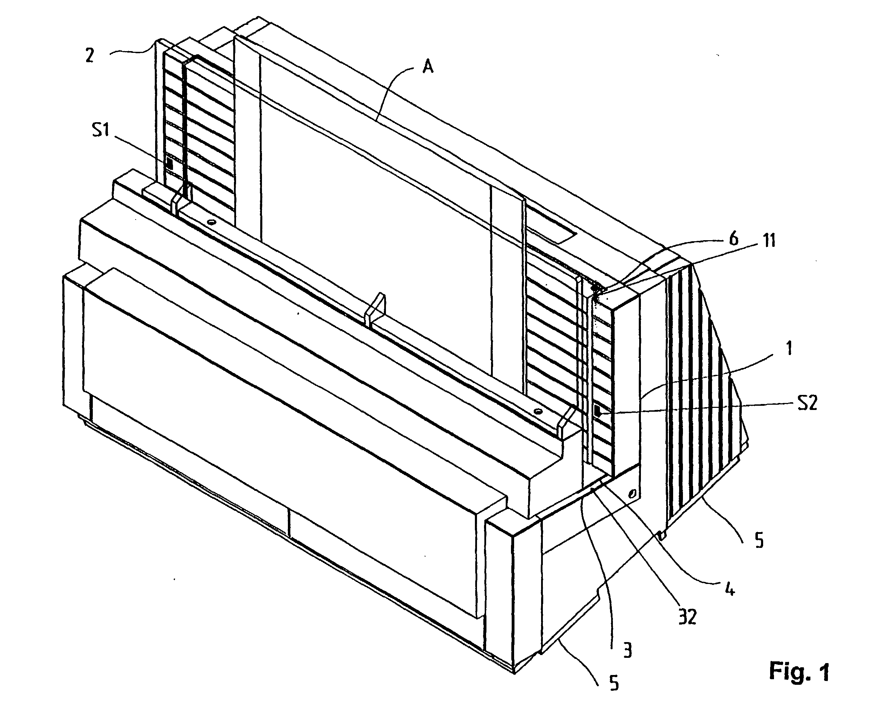

In der Figur 1 wird eine perspektivische Ansicht einer dynamischen Waage 10 dargestellt, die für den Transport von auf der Kante stehenden Briefen bzw. Poststücken A ausgebildet ist. Letztere liegen an einem Wiegeteller 6 an, welcher in einer Ausnehmung 11 in einer hinteren Führungswand 1 der Waage angeordnet ist. Beidseitig der Ausnehmung 11 für den Wiegeteller 6 sind in der hinteren Führungswand 1 Sensoren S1 und S2 angeordnet. In Höhe der unteren Führungswand 3 der Waage liegt eine Transporteinrichtung 4 mit einem Transportriemen, der unterhalb der Sensoren S1 und S2 umgelenkt wird. Die hintere Führungswand 1 ist leicht nach hinten geneigt, vorzugsweise um 18° über die Senkrechte hinaus. Das entspricht einem bereits für eine automatische Briefzuführung und eine Frankiermaschine ermittelten Optimierungswinkel, siehe auch DE 196 05 014 C1 und DE 196 05 015 C1. Die untere Führungswand 3 ist orthogonal zur hinteren und demzufolge auch zur vorderen Abdeckplatte 2 angeordnet. Damit wird eine definierte Brieflage und eine harmonische Anpassung an die vor- und nachgeordneten Geräte erreicht. Die vordere Abdeckplatte 2 besteht beispielsweise aus Plexiglas. Das Hinterende 32 der als Adapter zur Frankiermaschine ausgebildeten unteren Führungswand 3 im Briefauslauf der Waage ist so gestaltet, daß der Brief A während des Verlassens des Transportriemens zunächst frei liegt. Alle genannten Baugruppen bzw. Teile sind über entsprechende Zwischenstücke auf einem Chassis 5 befestigt. Ein (verdeckter) Motor 49 weist in vorteilhafter Weise in Verbindung mit der Anordnung der Transporteinrichtung 4 am Wiegeteller 6 eine Nachgiebigkeit auf, welche Stöße und Schwingungen bei schweren Poststücken bedämpft. Beispielsweise ist ein Gleichstrommotor vom Typ M42x15 Gefeg-Antriebstechnik geeignet. Weitere Einzelheiten zum konstruktiven Aufbau der Waage sind dem DE 19 833 767 C2 entnehmbar.

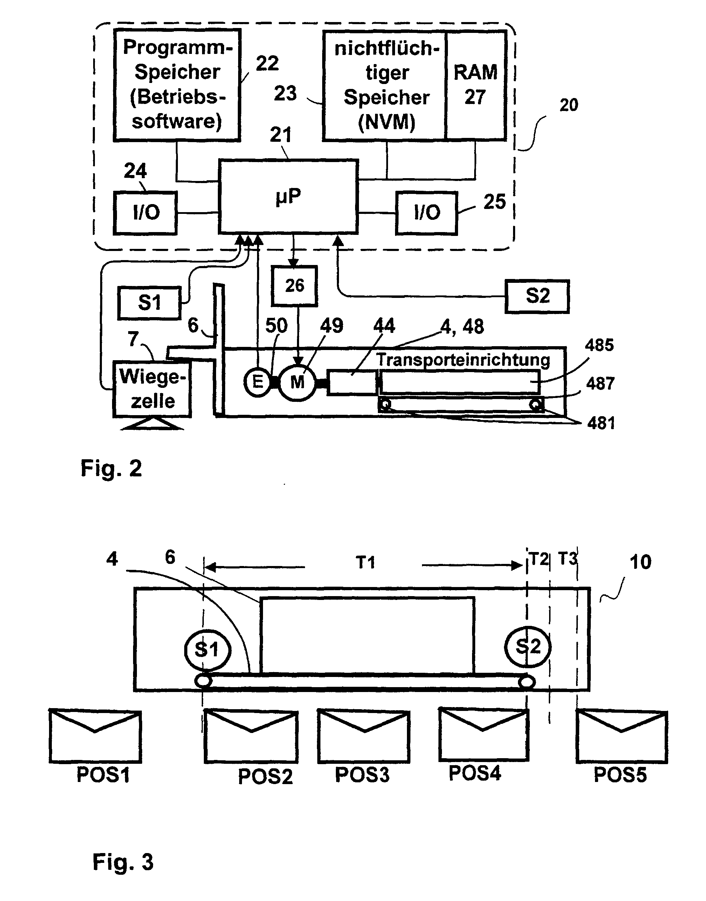

Die Figur 2 zeigt ein Blockschaltbild der Steuerung 20 einer dynamischen Waage 10, die einen Mikroprozessor 21 aufweist, welcher mit einem Programmspeicher 22, mit einem nichtflüchtigen Speicher 23, einem Arbeitsspeicher 27 sowie mit Schnittstellen zur Ein- und Ausgabe 24, 25 verbunden ist. Der Mikroprozessor 21 ist mit einem Motor 49 der Transporteinrichtung 4 der Waage über einen Treiber 26, mit einem Encoder 50 und mit Sensoren S1, S2 sowie mit einer Wiegezelle 7 betriebsmäßig verbunden, um Sensorsignale, Encodersignale und Gewichtsdaten zu empfangen und um Steuerbefehle an die Transporteinrichtung 4 zu senden. Die Transporteinrichtung 4 enthält vorzugsweise einen Gleichstrommotor 49, welcher mit Gleichstomimpulsen gespeist wird, wobei sich aufgrund des Verhältnises der Impulslänge zur Impulspause eine bestimmte Drehzahl einstellt.

Es ist vorgesehen, daß die Steuereinheit der dynamische Waage, in Abhängigkeit von der Auswertung der Gewichtsmessung den Transport des Poststückes zur Frankiermaschine stromabwärts erlaubt oder eine Umschaltung zum Nachwiegen vornimmt.

Im Betriebsmodus für den dynamischen Betrieb der Waage führt die Transporteinrichtung 4 eine Vorwärtsbewegung des betreffenden Briefes innerhalb der Waage stromabwärts mit einer für leichte Briefe konstanten Geschwindigkeit aus, wobei diese Geschwindigkeit die Transportgeschwindigkeit in der weiteren Verarbeitungsstation nicht übersteigt. Durch den Einsatz eines in der Polarität der abgegebenen Impulse umschaltbaren Treibers 26, der zwischen Gleichstrommotor 49 und der Steuerung 20 geschaltet ist, besitzt die Transporteinrichtung der Waage einen umschaltbaren Antrieb, womit bei entsprechender Steuerung die Transportrichtung der Waage im zweiten Betriebsmodus durch Umpolung der an den Motor 49 angelegten Impulsspannung umgekehrt werden kann. Der Motor 49 ist über ein geeignetes Getriebe 44 mit der Antriebsrolle 485 verbunden. Das Getriebe 44 kann sowohl ein Zahnradgetriebe als auch ein Riemengetriebe sein. Auf der Transporteinrichtung läuft ein Riemen (nicht dargestellt), der mittels einer Spannvorrichtung 48, 481, 487 gegen eine Federkraft (nicht dargestellt) gespannt wird.

In einer anderen Ausführungsform ist vorgesehen, daß die Transporteinrichtung der Waage einen umschaltbaren Antrieb und daß die Steuerung 20 den Treiber 26 umfaßt, der zwischen Antrieb und der Steuerung geschaltet ist, womit die Transportrichtung der Waage umgekehrt werden kann, um im zweiten Betriebsmodus eine Nachmessung auszuführen.

Der nichtflüchtige Speicher 23 umfaßt eine Anzahl an Speicherbereichen B1 bis Bn u.a. für bestimmte Parameter der Gewichtsermittlung. Letztere sind Anfangswerte für waagetypspezifische Grundeinstellungen. In einer Initialisierungsphase kann die Initialisierung über eine Schnittstelle der Waage vorgenommen werden. Alternativ werden Grundeinstellungen werkseitig, beispielsweise durch ein Stecken eines vorprogrammierten $E^2$PROMs, in der Initialisierungsphase vorgenommen. Dabei beziehen die Parameter auf folgende Größen:

| Parameter | Größe |
|-----------|-------|
| P1 | vorbestimmte Anzahl an Meßwerten |
| P2 | Offsetfaktor |
| P3 | Wertekorrekturfaktor |
| N | Korrekturfaktor |
| A1 | Erstes Abschaltkriterium für kleine Gewichte |

(fortgesetzt)

| Parameter | Größe |
|---|---|
| A2 | Zweites Abschaltkriterium für mittlere Gewichte |
| A3 | Drittes Abschaltkriterium für große Gewichte |
| G1 | Erster Überlastgrenzwert |
| G2 | Zweiter Überlastgrenzwert |
| G3 | Dritter Überlastgrenzwert |

Die Wiegezelle 7 besitzt Dehnungsmeßstreifen mit angeschlossener Auswerteschaltung, welche digitale Gewichtsdaten an den Mikroprozessor 21 abgibt. Der Sensor S1 stromaufwärts dient als Einlaufsensor und der Sensor S2 stromabwärts dient als Auslaufsensor. Zum Sensor gehört eine an sich bekannte Auswerteschaltung, welche digitale Signale an den Mikroprozessor 21 abgibt. Ein Sensor kann beispielsweise als Lichtschranke ausgebildet sein. Die Wiegezelle ist vorzugsweise vom Typ HBM PW 2G der Firma Hottinger Baldwin Meßtechnik.

Die Figur 3 zeigt eine Darstellung von Briefpositionen im Briefstrom relativ zum Wiegeteller 6 beim dynamischen Wiegen. Anhand der Figur 3 und nachfolgender Tabelle erfolgt die Erläuterung der Wirkungsweise der Steuerung 20:

| Position | Aktion der Steuerung |
|---|---|
| POS1 | Keine Aktion (Brief ist vor der Einlauflichtschranke) |
| POS2 | Start Meßzeitintervall, Motorregelung deaktivieren |
| POS3 | Meßphase (Brief liegt komplett auf dem Wiegeteller) |
| POS4 | Stop Meßzeitintervall, Gewicht ermitteln & auswerten |
| POS5 | Bereitschaft signalisieren (Brief hat Wiegeteller verlassen) |

Ein Brief läuft in die Einlauflichtschranke ein und aktiviert den Sensor S1. Die Sensoren S1 und S2 liegen außerhalb des Wiegebereiches stromauf- bzw. stromabwärts neben dem Wiegeteller 6 . Durch diese Konstruktion kann der Wiegeteller 6 in seiner Länge um 6 bis 10% verkürzt ausgebildet sein. Das erhöht besonders die Taktleistung beim dynamischen Wiegen leichter Poststücke. In der Position POS1 ist die Drehzahlregelung für den Motor 49 noch aktiviert. Die Position POS2 verdeutlicht die Lage eines Briefes beim Start der Messungen. Ein erster Meßzeitbereich T1 beginnt mit dem Wiegen bei deaktivierter Motordrehzahlregelung 21, 26, 29, 50. Die Briefhinterkante verläßt den Bereich des Sensors S1. Die Position POS3 verdeutlicht die Briefposition in der Meßphase. Keiner der Sensoren S1, S2 ist aktiviert.

Die Position POS4 verdeutlicht die Lage eines Briefes beim Ende der Messungen. Die Briefvorderkante erreicht den Bereich des Sensors S2. Bei dessen Aktivierung wird das Meßzeitintervall beendet.

Ein zweiter Rechenzeitbereich T2 schließt sich an, in welchem neben der Auswertung der Messungen auch geprüft wird, ob das Gewicht des Poststückes richtig bestimmt wurde, so daß letzteres in einem dritten Reaktionszeitbereich T3 stromabwärts zur Frankiermaschine weitergeleitet werden kann. In der Position POS5 verläßt der Brief die Waage. Ab dem Reaktionszeitbereich T3 - wobei in der Regel der Schwerpunkt des Briefes den Wiegeteller 6 noch nicht verlassen hat - kann jedoch noch der Brief auf den Wiegeteller 6 mittels einer umschaltbaren Transportvorrichtung zurück transportiert werden. Außerhalb des Meßzeitbereiches T1 wird die Drehzahlregelung für den Motor 49 wieder aktivert.

Die Auswerteschaltung Wiegezelle 7 gibt ständig, beispielsweise alle 0,010 Sekunden digitale Signale an den Mikroprozessor 21 ab. Letzterer erhält vom Sensor S1 ein Signal, wenn die Briefhinterkante den Bereich des Sensors S1 verläßt und der Meßzeitbereich T1 beginnt. Zugleich wird die Drehzahlregelung des Motors 49 deaktiviert. In Abhängigkeit von der Briefposition bzw. ab einem geeignetem Zeitpunkt wird eine durch den Parameter P1 vorbestimmte Anzahl Meßwerte M1,...,Mn bestimmt. Die Meßwerte werden vorzugsweise in einem Schieberegister eingespeichert. Der P1-Parameter definiert eine Anzahl an Stellen eines Schieberegisters, welches in diesen Stellen die nacheinander einlaufenden Meßwerte vorsortiert speichert. Bei Erreichen der Auslaufposition der Vorderkante des Briefes werden die durch P1 bestimmten Stellen parallel ausgelesen und digital verarbeitet. Bei 15 ausgelesenen Stellen ergibt sich retrospektiv ein Meßzeitbereich T1 von ca. 0,150 Sekunden.

Alternativ zum Schieberegister sind auch andere Speicher einsetzbar. Der P1-Parameter dient beispielsweise der Voreinstellung eines Rückwärtszählers, welcher hardware/softwaremäßig in der Steuerung 20 realisiert ist. Beim Erreichen des Zählwertes Null endet der Meßzeitbereich T1 (bei P1 = 15 nach ca. 0,150 Sekunden). Der Mikroprozessor 21 hat in einem Speicherbereich des nichtflüchtigen Speichers 23 inzwischen eine Kette mit der vorbestimmten Anzahl an Wiegewerten (15 Meßwertdaten) gespeichert, welche nun ausgelesen werden können.

Es ist vorteilhaft, wenn der Mikroprozessor beim Einlesen der Meßwerte bereits eine Sortierung vornimmt, weil dann eine anschließende Rechenzeit T2 verkürzt wird.

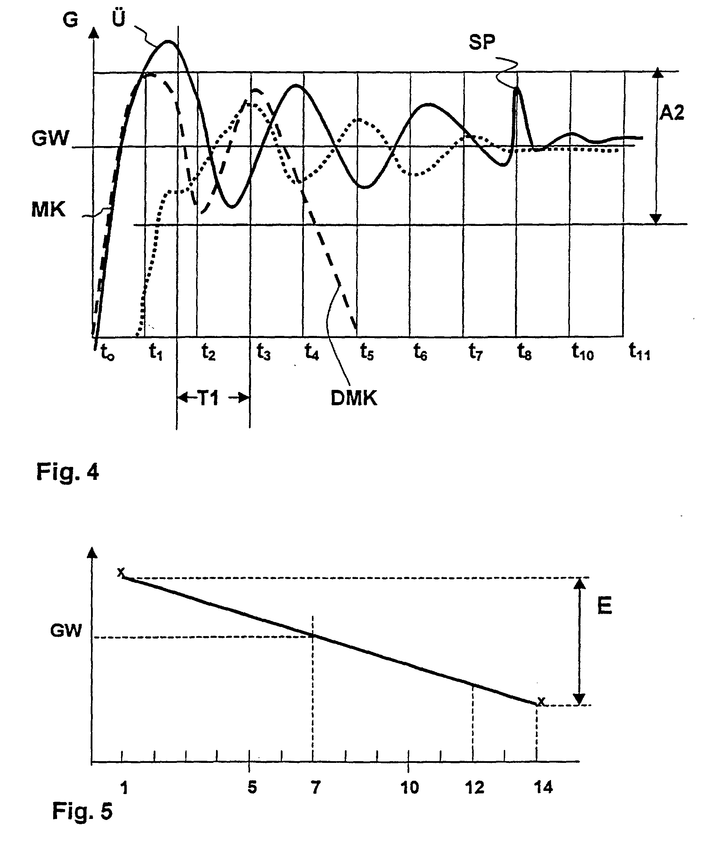

In der Figur 4 wird ein Zeitdiagramm über das Einschwingen der Waage dargestellt. Die schwarz ausgezogene Meßkurve MK ergibt sich, wenn ein Poststück länger auf dem Wiegeteller verharrt. Eine tatsächlich gemessene Meßkurve kann erheblich verformt (gepunktet gezeichnet) und von der Idealform abweichend ausgebildet sein. Beim dynamischen Wiegen wird das Poststück den Wiegeteller schon früher verlassen, so daß sich im Idealfall die dynamische Meßkurve DMK (gestrichelt dargestellt) ergibt. Die Wiegegenauigkeit ist erfahrungsgemäß vom Schwingungsverhalten der Waage abhängig, wobei die Vorlast, das Massenträgheitsmoment, die Steifigkeit und Dämpfung den größten Einfluß ausüben. Die Meßwerte, welche im Meßzeitbereich T1 zum Mikroprozessor 21 gelangen, schwanken um den Gewichtswert GW und werden deshalb nach dem erfindungsgemäßen Verfahren weiter verarbeitet. So dürfen einzelne Stöße, welche sich als Störspitze SP auf der Meßkurve MK bzw. DMK bemerkbar machen, das Meßergebnis nicht verfälschen. Aus der Meßkurve MK bzw. DMK wird daher möglichst schnell der Gewichtswert GW ermittelt. Es sollte frühzeitig erkannt werden, ob sich aufgrund der Störungen ein Weiterwiegen noch lohnt. Im dargestellten Beispiel liegt das erste Überschwingen der Meßkurve MK oberhalb des zweiten Abschaltkriteriums A2 für mittlere Gewichte. Die Meßkurve wird mittels zweier Fenster (Zeit- und Gewichtsfenster) ausgewertet. Das erste Überschwingen Ü der Meßkurve MK oberhalb des zweiten Abschaltkriteriums A2 für mittlere Gewichte wird als Fehler gewertet, wenn es innerhalb der beiden Fenster vorkommt. Die Fenster werden in einen Bereich der Meßkurve MK bzw. DMK gelegt, in welchen das erste Überschwingen bereits abklingt.

Eine weitere Bedingung ist, daß die Kette der Meßwerte M1,...,Mn während des kontinuierlichen Transportes im Gewichtsfenster A2 liegt. Für mittlere Gewichte (ca. 500g) wird ein Gewichtsfenster A2 festgelegt. Bereits die ersten Meßwerte der Meßkurve DMK liegen im Meßzeitbereich T1 und im Gewichtsbereich des zweiten Abschaltkriteriums A2 und ergeben somit gültige Meßwerte. Der Mikroprozessor 21 hat nun in einem weiterem Speicherbereich B2 des nichtflüchtigen Speichers 23 die nach der Größe sortierte Kette an Meßwerten gespeichert. Dem Meßzeitbereich T1 schließt sich ein zweiter Rechenzeitbereich T2 an, in welchem eine Auswertung der Messungen erfolgt.

Die in der Figur 5 gezeigte Darstellung von sortierten Gewichtswerten dient der Verdeutlichung des weiteren Ablaufes. Der erste sortierte Gewichtswert ist der größte. Er ist nicht zwangläufig der erste im Zeitintervall T1 gemessene Meßwert, sondern kann beispielsweise auch durch eine Störspitze verursacht sein. Die Sortierung erfolgt nach der Größe, so daß der letzte sortierte Gewichtswert der kleinste ist. Bei 14 sortierten Gewichtswerten ergibt dann der siebente einen mittig liegenden Meßwert $M_m$, welcher einem Mittelwert in der Regel aber nur in grober Näherung entspricht und gegebenenfalls erheblich von einem solchen abweichen kann. Die gezeichnete Gerade idealisiert den tatsächlichen Verlauf der Abstufung. Die Verringerung der Größe der Gewichtswerte ist natürlich in Wirklichkeit nichtlinear, somit ist der siebente der sortierten Gewichtswerte noch nicht mit dem entgültigem Meßwert gleichzusetzen.

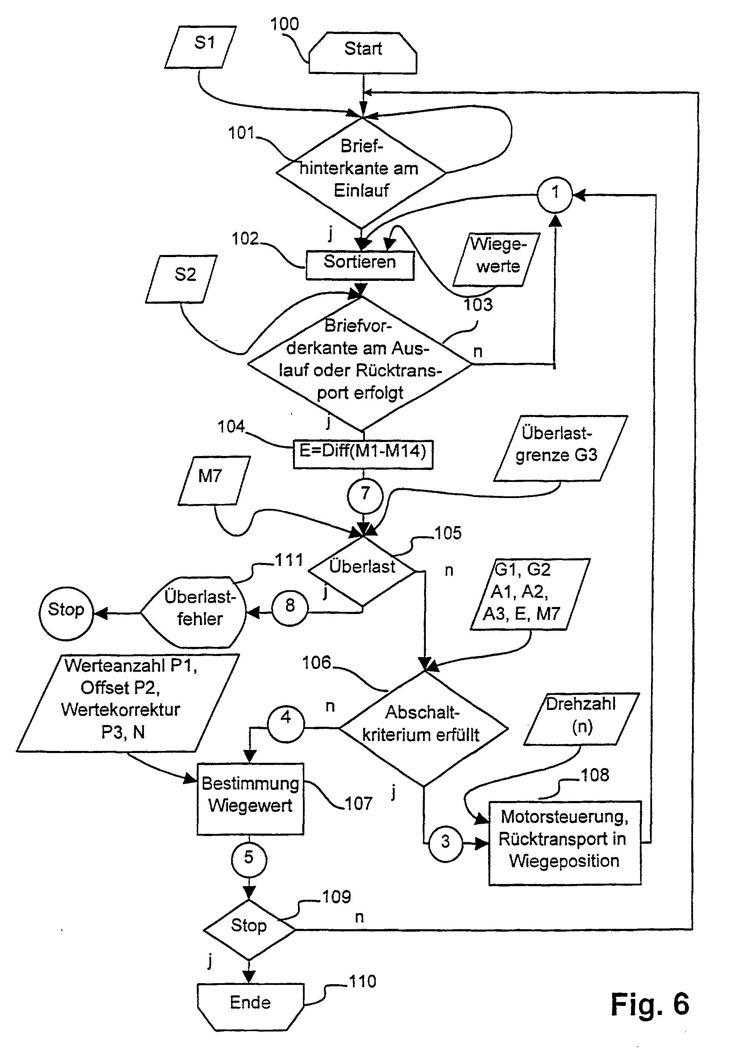

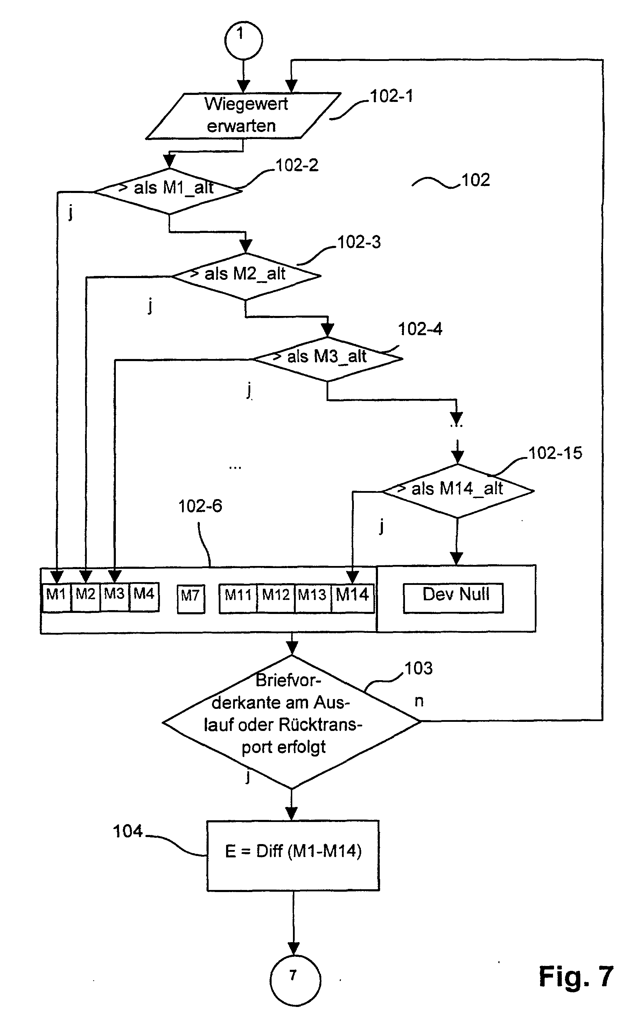

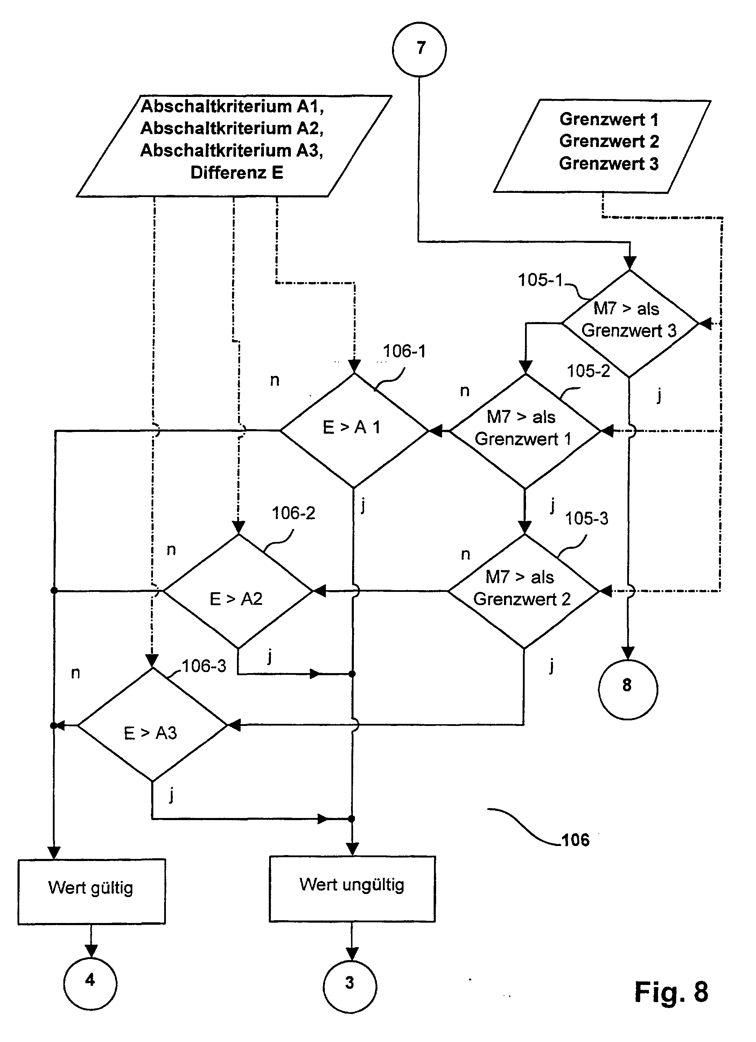

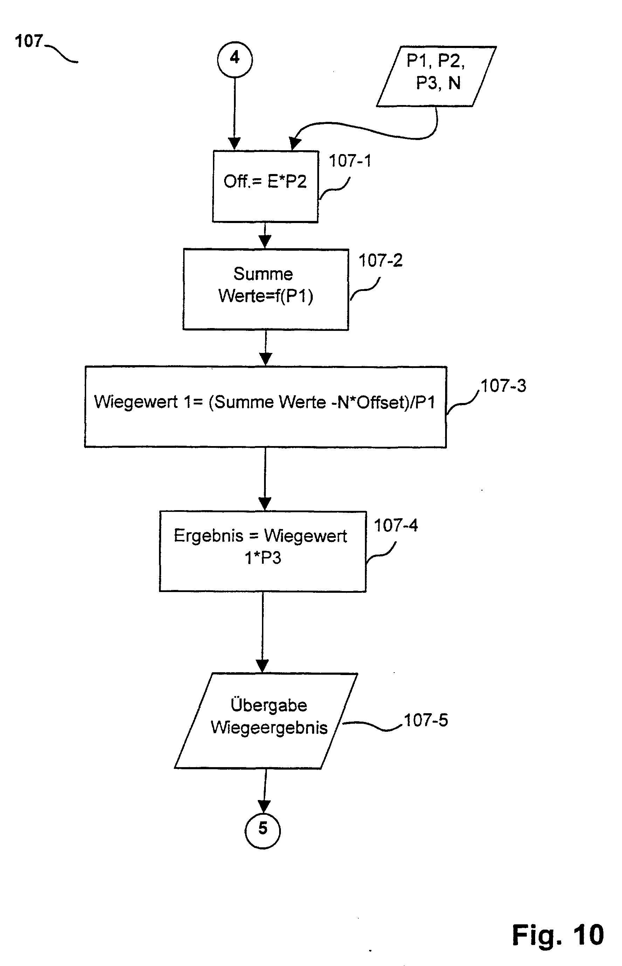

Die Figur 6 zeigt das Flußdiagramm für die Steuerung der Waage. Der Mikroprozessor kann mittels des Sensors S1 am Briefeinlauf die Briefvorderkannte feststellen und startet die Gewichtsbestimmung (im Schritt 100). Ständig werden Wiegemeßwerte von der Wiegezelle 7 geliefert. Der Mikroprozessor hat mittels des Sensors S1 am Briefeinlauf die Briefhinterkante erkannt (im Schritt 101) und startet das Unterprogramm Sortieren (im Schritt 102), was anhand der Figur 7 noch näher erläutert wird. Nach einem Zeitablauf erkennt der Mikroprozessor mittels des Sensors S2 am Briefauslauf 32 die Briefvorderkante (im Schritt 103). Der für eine Erfassung der (durch den Parameter P3) vorbestimmte Anzahl an letzten Meßwerten verstrichene Zeitbereich wird als Meßzeitbereich T1 bezeichnet. Der Mikroprozessor bildet nun einen Entscheidungsparameter E im Schritt 104 als Differenzwert zwischen dem sortierten größten und kleinsten Wert und startet die Abfrage nach mindestens einer Überlast im Schritt 105. Der Meßwert M7 wird mit dem höchsten Überlastgrenzwert G3 verglichen. Ein gegebenenfalls vorliegender Überlastfehler wird (im Schritt 111) weiter ausgewertet und die Waage gestoppt. Liegt keine Überlast vor, dann wird in einem weiterem Abfrageschritt 106 festgestellt, ob der Wert gültig oder ungültig ist. Dazu wird ein Unterprogramm aufgerufen, das anhand der Figur 8 näher erläutert wird. Der Differenzwert E aus dem ersten M1 und vierzehnten sortierten Meßwert M14 soll innerhalb des Gewichtsbereichs eines der Abschaltkriterien A1, A2 oder A3 liegen. Er liegt beispielsweise innerhalb des vom zweiten Abschalt-kriterium A2 definierten Bereiches und ergibt somit gültige Meßwerte. Da keines der Abschaltkriterien erfüllt ist kann nun zur Bestimmung des Wiegewertes auf den Schritt 107 verzweigt werden, in welchen ein Unterprogramm aufgerufen wird, welches anschließend anhand der Figur 10 noch näher erläutert wird. Anderenfalls, bei ungültigen Meßwerten, wird auf den Schritt 108 verzweigt, wo die Motorsteuerung umgeschaltet wird, um den Rücktransport des Poststückes in die Wiegeposition und um ein Nachwiegen zu veranlassen. Die Drehzahl n wird vom Encoder 50 festgestellt und kann zur Drehzahlsteuerung verwendet werden. Vom Schritt 108 wird dann auf den Schritt 102 zum Sortieren zurückverzweigt. Wenn die Waage nicht (beispielsweise manuell) gestoppt wird, was im Schritt 109 abgefragt wird, dann wird vom Schritt 109 auf den Schritt 101 zurückverzweigt. Bei einem festgestellten Stopp-Befehl wird das Ende des Betreibens der Waage erreicht (Schritt 110). Bei erfolgreicher Gewichtsbestimmung im Schritt 107 erfolgt in einem Subschritt die Übergabe (Schritt 107-5) des Wiegeergebnisses an die Frankiermaschine.

Die Figur 7 zeigt den Teilablaufplan Sortieren. In einem ersten Subschritt 102-1 wird der Eingang von Wiegewerten erwartet. Die eingegangenen Wiegewerte durchlaufen nacheinander die Abfrageschritte 102-2, 102-3, 102-4,...,102-15, wobei diese in jedem Abfrageschritt mit je einem der vorhergehenden Meßwerte M1_alt, M2_alt, ..., M14_alt verglichen werden. Ist der neue Meßwert größer als der vorhergehende, wird vom jeweiligen Abfrageschritt auf einen Schritt 102-6 zum Speichern der sortierten Meßwerte im Schieberegister verzweigt. Der Mikroprozessor stellt mittels des Abfrageschrittes 103 anhand eines Signals vom Sensor 2 fest, ob das Sortieren weitergeführt werden muß oder beendet werden kann. Wenn die Briefvorderkante am Auslauf vom Sensor S2 detektiert wird oder der Rücktransport von der Steuerung veranlaßt wird, dann wird zum Sortieren auf den Subschritt 102-1 zurückverzweigt. Anderenfalls wird zum nächsten Schritt 104 verzweigt, mit welchem die Auswertung der Meßwerte beginnt. Dem Schieberegister werden im Schritt 104 der in der Größe nach erste M1 und letzte (vierzehnte) Meßwert M14 entnommen und eine Differenz E gebildet, indem beide voneinander subtrahiert werden. Die Differenz E wird zwischengespeichert und steht im Rechenzeitintervall T2 für die Auswertung der Meßwerte zur Verfügung.

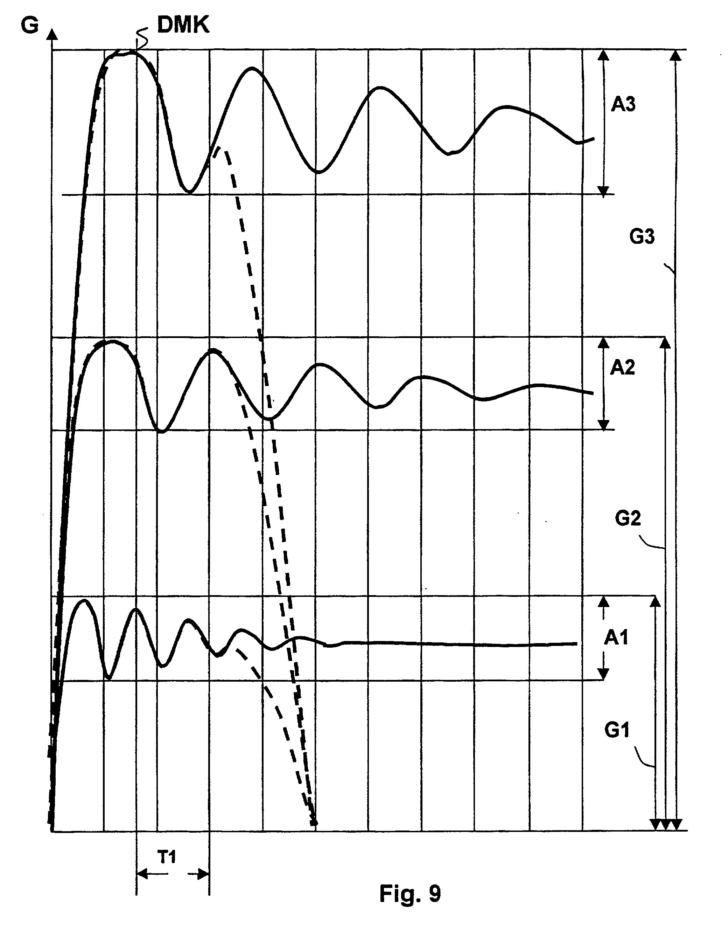

Die Figur 8 zeigt den Teilablaufplan Überlast und Abschaltkriterium. In den Abfrageschritten 105-1, 105-2, 105-3 wird der siebente Meßwert mit je einem Grenzwert G3, G1 und G2 verglichen. Auf diese Weise kann die Gewichtsklasse bestimmt werden, welcher die Meßwerte zuordenbar sind. Ist der siebente Meßwert M7 größer als der dritte Grenzwert G3, dann wird eine Überlast festgestellt und es wird der Punkt 8 erreicht. Anderenfalls ist M7 < G3 und nun wird geprüft, ob der siebente Meßwert größer als der erste Grenzwert G1 ist. Ist dies der Fall, d.h. G1 < M7 < G3 liegt vor, dann wird geprüft, ob der siebente Meßwert größer als der zweite Grenzwert G2 ist. Ist dies der Fall, d.h. G1 < G2 < M7 < G3 liegt vor, dann wird auf den Abfrageschritt 106-3 verzweigt. Gemäß Abfrageschritt 106-3 darf E nicht größer als das dritte Abfragekriterium A3 sein, wenn die erfaßten Meßwerte gültig sein sollen. Anderenfalls wird vom Abfrageschritt 105-2 bzw. 105-3 auf den Abfrageschritt 106-1 bzw. 106-2 verzweigt. In den Abfrageschritten 106-1, 106-2, 106-3 wird die Differenz E mit einem Wert A1, A2 und A3 als Abschaltkriterium verglichen. Wenn die Differenz E größer als das Abschaltkriterium A1, A2 oder A3 ist, dann sind die Meßwerte ungültig (Punkt 3). Die Meßwerte sind gültig (Punkt 4), wenn die Differenz E innerhalb des Abschaltkriteriums A1, A2 oder A3 liegt. Die Begriffe "Grenzwerte" und "Abschaltkriterien" erläutert Figur 9.

Die Figur 9 zeigt ein Zeitdiagramm über das Einschwingen der Waage bei drei verschiedenen Poststückgewichten. Bei einem hohen Grenzwert G3 eines Poststückgewichtes G für eine obere Gewichtsklasse verläuft das Einschwingen der Waage in der Regel in einem Bereich A3, welcher als Abschaltkriterium dient. Für Poststückgewichte einer mittleren Gewichtsklasse bis zu einem Grenzwert G2 gilt ein anderer Bereich A2 als Abschaltkriterium. Für Poststückgewichte einer kleinsten Gewichtsklasse bis zu einem Grenzwert G1 gilt ein weiterer Bereich A1 als Abschaltkriterium.

In der Figur 10 ist der Teilablaufplan Wiegewertbestimmung dargestellt. Im ersten Schritt 107-1 werden der zwischengespeicherte Differenzwert E und ein Parameter P2 aufgerufen und miteinander multipliziert. Der Parameter P2 kann auch auf einen negativen Wert eingestellt werden. Das Produkt aus P2 und E ergibt einen Offsetwert, welcher u.a. benötigt wird, um einen Offset der Wiegezelle auszugleichen:

$$\text{OFFSET} = E \cdot P2 \qquad\qquad (1)$$

Im zweiten Schritt 107-2 werden die zwischengespeicherten Meßwerte M1 bis Mx addiert, wobei x durch den Parameter P1 definiert wird und beispielsweise den Wert 14 beträgt. Bei vorzugsweise 14 Meßwerten gilt:

$$\text{Summe} = f\{P1\} = \sum_{X=1}^{14} Mx \qquad\qquad (2)$$

Somit kann aus der Summe aller Werte nach einer Offsetkorrektur mittels der Division durch die Anzahl der Werte (Parameter P1) ein Wiegewert W1 gebildet werden, der dem Mittelwert der Meßwerte annähernd entspricht. Die Offsetkorrektur kann um einen Faktor N (1 bis 5) verstärkt werden, wenn dieses die ermittelte Gewichtsklasse erfordert. Somit ergibt sich nun für den Wiegewert W1:

$$W1 = \left\{ \sum_{X=1}^{14} Mx - (N \cdot \text{OFFSET}) \right\} / P1 \qquad\qquad (3)$$

Um als Ergebnis den bestimmten Gewichtswert W zu erhalten, welches zur stromabwärts angeordneten Frankiermaschine übermittelt wird, wird am Ende des Rechenzeitbereichs T2 wird der Wiegewert W1 noch mit einem Wertekorrekturfaktor P3 multipliziert:

$$W = P3 . W1 \qquad (4)$$

Die Steuerung der dynamische Waage nimmt, in Abhängigkeit von der Auswertung der Gewichtsmessung im ersten Betriebsmodus eine Umschaltung in einen weiteren Betriebsmodus vor, der den Transport des Poststückes zur weiteren Verarbeitungsstation stromabwärts veranlaßt, wenn eine entsprechende Voreinstellung der Steuerung der dynamische Waage es erlaubt, daß bei einer ungenauen Messung, ein korrigierter Gewichtswert anstelle des der tätsächlichen Gewichtswertes gesetzt wird, wobei innerhalb einer Bandbreite der korrigierte vom tätsächlichen Gewichtswert abweichen kann. Dies geschieht in den Schritten:

- Sortieren (102) der Meßwerte ihrer Größe nach im Meßzeitintervall (T1) vor der Auswahl des mittig liegenden Meßwertes ($M_m$),
- Bildung (104) des Entscheidungsparameters (E) aus einer Differenz von sortierten Meßwerten,
- Feststellung (105) im Rechenzeitintervall (T2), daß der aus den sortierten Meßwerten mittig liegender Meßwert ($M_m$) in gewissen Grenzen (G1,G2,G3) liegt,
- Weiterverarbeitung (106) der gültigen Meßwerte, wobei letztere gültig sind, wenn der Entscheidungsparameter (E) die Bandbreite der Abschaltkriterien (A1,A2,A3) nicht überschreitet und
- Ausgabe (107) eines korrigierten Gewichtswertes W.

Beim Weiterverarbeiten der Meßwerte erfolgt deren Korrektur anhand bestimmter Parameter P2, P3. Mit der Frankiermaschine erfolgt dann ein Drucken eines Portos, das dem korrigierten Gewichtswert entspricht, der um einen Betrag oder Faktor P2, P3 höher als der ermittelte, wahrscheinlich ungenaue Wert liegt. Das hat nur Auswirkungen, wenn der tatsächliche Gewichtswert in der Nähe von Portogrenzen liegt - dann würde das Poststück überfrankiert werden - oder wenn der als wahrscheinlich ungenau detektierte Wert grob falsch ist. In letzterem Fall kann eine Nachmessung veranlaßt werden, sofern kein plausibler Wert festgestellt werden kann. Wenn die Meßwerte gültigen sind, erfolgt eine automatische Umschaltung in den halbdynamischen Betrieb der Waage. Das Poststück wird in die Wiegeposition zurück transportiert und kann dann nachgewogen werden ohne bewegt zu werden..

Beim dynamischen Betrieb wird während des Transportes des Poststückes eine Korrektur des Meßwertes anhand bestimmter Parameter P2, P3 durchgeführt, bevor er als korrigierter Gewichtswert W ausgegeben wird. Dieselbe Wiegezelle 7 liefert ein von der Transportgeschwindigkeit abhängiges Wiegemeßergebnis. Die Auswerteschaltung Wiegezelle 7 gibt ständig, beispielsweise alle 0,010 Sekunden digitale Signale an den Mikroprozessor 21 ab und im Meßzeitbereich T1 können 15 Meßwertdaten gespeichert werden. Bei einer höheren Transportgeschwindigkeit verkürzt sich der Meßzeitbereich auf einen Meßzeitbereich T1'. Bei einer konstanten Taktfrequenz stehen bei der langsamen Transportgeschwindigkeit mehr Wiegewerte zur Verfügung als bei einer hohen Geschwindigkeit. Die Auswertung der Wiegewerte erfolgt zweckmäßigerweise optimiert durch die Wahl eines geeigneten Auswerteverfahrens und die Wahl geeigneter Parameter zur Steuerung dieser Auswertung. Die Verwendung des gleichen Auswerteverfahrens wird vorausgesetzt, um eine Parametersteuerung über geeignete Parameterwahl zu realisieren. Weiterhin wird vorgesehen, daß zu jeder Zeit die Transportgeschwindigkeit mittels eines geeigneten Sensors gemessen wird. Der Encoder 50 ist beispielsweise mechanisch mit der Antriebswelle des Motors 49 gekoppelt und liefert ein Signal zum Mikroprozessor 21.

Theoretisch gibt es für jede Transportgeschwindigkeit eine optimale Parameterwahl mit der das Wiegemeßergebnis weiter optimiert werden kann. Die Vielzahl von Zwischengeschwindigkeiten zwischen der minimalen und der maximalen Transportgeschwindigkeit führt praktisch zu einem Parameterkennfeld. Dieses Parameterkennfeld ist dadurch gekennzeichnet, daß jeder möglichen Transportgeschwindigkeit ein Parametersatz zugeordnet ist. Als ein Parametersatz werden zusammengehörige Parameter bezeichnet.

Diese Parametervariantion läßt sich bei begrenztem Speicherplatz aber unbegrenzter Anzahl an Geschwindigkeiten nicht rechenzeitoptimiert umsetzen. Aus diesem Grunde wird in der bevorzugten Ausführungsform für die Lösung der zusätzlichen Erfindungsaufgabe eine begrenzte Anzahl, zum Beispiel drei repräsentative Geschwindigkeiten vorgegeben. Für die Geschwindigkeiten wird jeweils ein Parametersatz im Programmpeicher 22 (EPROM). hinterlegt. Auf diese Weise werden auch drei Geschwindigkeitsbereiche V1, V2 und V3 vorgegeben.

| Zeichen | Parameter | V1 | V2 | V3 |
|---|---|---|---|---|
| | | bis 0,3 m/s | bis 0,4 m/s | bis 0,7 m/s |
| P1 | Meßwerteanzahl | 20 | 14 | 10 |
| P2 | Korrekturwert 1 | 0 | 0,3 | 0,5 |
| P3 | Korrekturwert 2 | 1 | 0,9995 | 0,9993 |
| N | Korrekturfaktor | 1 | 2 | 3 |
| A1 | Abschaltkriterium 1 | 8 | 10 | 15 |
| A2 | Abschaltkriterium 2 | 12 | 15 | 25 |
| A3 | Abschaltkriterium 3 | 20 | 30 | 45 |
| G1 | Grenzwert 1 | 299 | 299 | 299 |
| G2 | Grenzwert 2 | 699 | 599 | 499 |
| G3 | Grenzwert 3 | 1700 | 1500 | 1200 |

In der Initialisierungsphase der dynamischen Waage wird für das System die Transportgeschwindigkeit eingegeben, um anhand dessen die Auswerteparameter voreinzustellen. In die Speicherbereiche des nichtflüchtigen Speichers 23 wird dann ein entsprechend ausgewählter Parametersatz mit Anfangswerten und Parametern (P1,P2,P3, G1,G2,G3, A1,A2,A3, N) für die Auswertung der Meßwerte gespeichert.

Außerdem kann eine weitere Anpassung während des Betriebes des Systems vorgesehen sein. Da zu jeder Zeit T1, T2, T3 die Transportgeschwindigkkeit mittels des Encoders 50 bzw. eines anderen geeigneten Sensors gemessen wird, kann eine Parametersatzumschaltung nach dem Meßzeitintervall T1 erfolgen. Somit führt eine Veränderung der Transportgeschwindigkeit durch Schlupf oder externe Regelung zur Anpassung der Wiegewertauswertung und deren Optimierung. Bei hohem Durchsatz an Poststücken, zum Beispiel 4000 Stück an 100-400g Briefen im Format C6 bis B4 bei der Geschwindigkeit V3 = 0,7 m/s, ist dennoch eine hohe Meßsicherheit und eine Unabhängigkeit von äußeren Störungen gegeben.

Eine weitere Ausführungsform ermöglicht durch eine Interpolation von Parametersätzen bei Zwischengeschwindigkeiten eine noch bessere Anpassung. Wird nun während des Betriebes eine Geschwindigkeitsgrenze überschritten, so wird automatisch auf den Parametersatz zurückgegriffen, der für den aktuellen Geschwindigkeitsbereich optimal ist. Wenn parallel zum Messen durch Interpolation im Meßzeitintervall ein neuer Parametersatz berechnet wird, kann eine Parametersatzumschaltung auf den neuen Parametersatz bereits nach dem Meßzeitintervall T1 erfolgen und somit im Rechenzeitintervall T2 wirksam werden.

Wenn parallel zum Meßzeitintervall T1 und Rechenzeitintervall T2 ein neuer Parametersatz berechnet wird, kann eine Parametersatzumschaltung auf den neuen Parametersatz erst für ein nachfolgendes Meßzeitintervall T1 wirksam werden. Nach Ausgabe des korrigierten Gewichtswertes W an die Frankiermaschine, d.h. im Reaktionszeitbereich T3, muß die Umschaltung auf den neuen Parametersatz abgeschlossen werden.

Die Weiterverarbeitung der gültigen Meßwerte und deren Prüfung bezüglich der Plausibilität eines Wiegewertes sowie ggf. die eine Parametersatzumschaltung erfolgt programmgesteuert durch den Mikroprozessor. Anstelle des Mikroprozessors können natürlich auch ein Mikrocontroller oder anderwenderspezifische Schaltkreise (ASIC's) eingesetzt werden.

Die Erfindung ist nicht auf die vorliegenden Ausführungsform beschränkt, da offensichtlich weitere andere Ausführungen der Erfindung, innerhalb des Umfangs der beiliegenden Ansprüche, entwickelt bzw. eingesetzt werden können, die vom gleichen Grundgedanken der Erfindung ausgehend, die von den anliegenden Ansprüchen umfaßt werden.

**Patentansprüche**

1. Verfahren zum Bestimmen eines Gewichtes mit einer dynamischen Waage, mit einem Steuern der Transporteinrichtung, mit einem Liefern von Wiegewerten und mit einer Auswertung der von einer Wiegezelle übermittelten Meßwerte in einer Steuereinheit der Waage, **gekennzeichnet durch** eine Auswahl (102) eines mittig liegenden Meßwertes ($M_m$) zum Vergleich mit mindestens einem Überlastgrenzwert (G1, G2, G3) hinsichtlich einer Prüfung auf Überlastfreiheit und **durch** eine Bildung (104) eines Entscheidungsparameters (E) zum Vergleich mit mindestens einem Abschaltkriterium (A1, A2, A3) hinsichtlich einer Prüfung auf Gültigkeit der von der Wiegezelle übermittelten Meßwerte.

**2.** Verfahren, nach Anspruch 1, **gekennzeichnet durch** die Schritte:

- Sortieren (102) der Meßwerte ihrer Größe nach im Meßzeitintervall (T1) vor der Auswahl eines mittig liegenden Meßwertes ($M_m$),
- Bildung (104) des Entscheidungsparameters (E) aus einer Differenz von sortierten Meßwerten,
- Feststellung (105) im Rechenzeitintervall (T2), daß der aus den sortierten Meßwerten mittig liegender Meßwert ($M_m$) in gewissen Grenzen (G1,G2,G3) liegt,
- Weiterverarbeitung (106) der gültigen Meßwerte, wobei letztere gültig sind, wenn der Entscheidungsparameter (E) die Bandbreite der Abschaltkriterien (A1,A2,A3) nicht überschreitet und
- Ausgabe (107) eines korrigierten Gewichtswertes W.

**3.** Verfahren, nach den Ansprüchen 1 und 2, **dadurch gekennzeichnet, daß** im Meßzeitintervall (T1) eine ständige Abgabe von Meßwerten von der Wiegezelle (7) und deren Speicherung ihrer Größe nach in einem Speicherbereich eines Speichers unter Steuerung eines Mikroprozessors erfolgt und daß der Entscheidungsparameter (E) gebildet wird, indem dem Speicherbereich des Speichers der in der Größe nach erste (M1) und letzte Meßwert (M14) entnommen und dann beide voneinander subtrahiert werden.

**4.** Verfahren, nach den Ansprüchen 1 bis 3, **dadurch gekennzeichnet, daß** die vorgenannte Differenz (E) im Rechenzeitintervall (T2) zwischengespeichert und für die Überprüfung auf Meßfehler herangezogen wird, die anhand von Abschaltkriterien (A1,A2,A3) erfolgt, wobei für gültige Meßwerte die Differenz (E) nicht größer als das dritte Abfragekriterium (A3) ist, daß die Steuereinheit der dynamischen Waage, in Abhängigkeit von der Auswertung der Gewichtsmessung für gültige Meßwerte den Transport des Poststückes zur Frankiermaschine stromabwärts erlaubt oder eine Umschaltung zum Nachwiegen vornimmt, wenn die Differenz (E) die Bandbreite der Abschaltkriterien (A1,A2,A3) überschreitet.

**5.** Verfahren, nach Anspruch 4, **dadurch gekennzeichnet, daß** die Differenz (E) in Abfrageschritten (106-1, 106-2, 106-3) mit einem Wert (A1, A2 und A3) als Abschaltkriterium verglichen wird, wobei wenn die Differenz (E) größer als das jeweilige Abschaltkriterium (A1, A2 oder A3) ist, die Meßwerte ungültig sind und wobei die Meßwerte gültig sind, wenn die Differenz (E) innerhalb der Bandbreite des jeweiligen Abschaltkriteriums (A1, A2 oder A3) liegt.

**6.** Verfahren, nach den Ansprüchen 1 und 2, **dadurch gekennzeichnet, daß** der mittig liegende Meßwert ($M_m$) zur Überprüfung auf Vorliegen einer Überlast aus dem Speicher ausgelesen wird und dann in den Abfrageschritten (105-1, 105-2, 105-3) mit je einem Grenzwert (G3, G1 und G2) für bestimmte Gewichtsklassen verglichen wird.

**7.** Verfahren, nach Anspruch 6, **dadurch gekennzeichnet, daß** eine Überlast festgestellt wird, wenn der mittig liegende Meßwert (M7) größer als der dritte Grenzwert (G3) einer oberen Gewichtsklasse ist.

**8.** Verfahren, nach Anspruch 2, **dadurch gekennzeichnet, daß** die sortierten Meßwerte in einem Speicher gespeichert werden, wobei ein erster Parameter (P1) die Stellenanzahl an Speicherzellen im Speicher für die Meßwerte vorgibt, daß nach Prüfung der Gültigkeit der Messung eine Korrektur des Wiegewertes mit einem Offsetwert und einem Wertekorrekturfaktor durchgeführt wird, wobei die Korrektur der Werte anhand eines Offsetwertes, der sich als Produkt des Wertes der Differenz (E) mit dem Parameters (P2) für den Offsetfaktor der von der Wiegezelle gelieferten Meßwerte ergibt, und anhand eines dritten Parameters (P3) erfolgt, der als Wertekorrekturfaktor mit einem Wiegewert (W1) multipiziert wird, wobei der Wiegewert (W1) aus der Summe aller Meßwerte nach Subtraktion mit dem Offsetwert und nach Division durch den ersten Parameter (P1) gebildet wird.

**9.** Verfahren, nach Anspruch 1, **dadurch gekennzeichnet, daß** ein dem Gewicht des Poststückes entsprechender Wiegemeßwert bestimmt, daß zu jeder Zeit die Transportgeschwindigkeit mittels eines geeigneten Sensors gemessen und ein Parametersatz entsprechend einem aus einer Vielzahl an Transportgeschwindigkeitsbereichen für die Auswertung des Wiegemeßergebnisses vorgeben wird.

**10.** Verfahren, nach Anspruch 9, **gekennzeichnet, durch** eine Interpolation von Parametersätzen bei Zwischengeschwindigkeiten für eine noch bessere Anpassung.

**11.** Anordnung zum Bestimmen eines Gewichtes mit einer dynamischen Waage, mit einer Transporteinrichtung (4), einem Wiegeteller (6), einer Wiegezelle (7), Sensoren (S1,S2, 50) und mit einer elektronischen Steuereinheit (20), welche neben einer Steuerung der Transporteinrichtung eine Auswertung der von der Wiegezelle übermittelten Meßwerte und die Ausgabe eines korrigierten Gewichtswertes über eine Schnittstelle (25) an eine Frankiermaschine durchführt, **gekennzeichnet dadurch, daß** die Steuereinheit (20) einen mit einem Mikroprozessor (21) verbundenen nichtflüchtigen Speicher (23) zur Speicherung einer Anzahl an Parameter für den Betrieb der Waage, einen Programmspeicher (22) und einen Arbeitsspeicher (27) einschließt, wobei ein erster Parameter (P1) die Stellenanzahl an Speicherzellen in letzterem Arbeitsspeicher (27) bestimmt, daß Wiegezelle (7) und Steuereinheit (20) verbunden sind, wobei eine ständige Abgabe von Meßwerten von der Wiegezelle (7) und deren Speicherung in einem Speicherbereich des Arbeitsspeichers (27) der Steuereinheit (20) erfolgt, und daß der Mikroprozessor programmiert ist, eine Prüfung auf Überlastfreiheit durch eine Auswahl eines mittig liegenden Meßwertes ($M_m$) zum Vergleich mit mindestens einem Überlastgrenzwert (G1, G2, G3) und eine Prüfung auf Gültigkeit der von der Wiegezelle (7) übermittelten Meßwerte durch eine Bildung (104) eines Entscheidungsparameters (E) zum Vergleich mit mindestens einem Abschaltkriterium (A1, A2, A3) durchzuführen.

**12.** Anordnung, nach Anspruch 11, **dadurch gekennzeichnet, daß** der Mikroprozessor programmiert ist,

-   beim Eingang der Meßwerte eine Sortierung nach ihrer Größe vorzunehmen und in die entsprechend dafür vorgesehenen Speicherzellen einspeichert bis ein Meßzeitintervall (T1) endet,
-   zur Auswertung von den der Größe nach sortierten Meßwerten in einem Rechenzeitintervall (T2) zunächst einen mittig liegenden Meßwert (M7) auszuwählen und mit den Grenzwerten (G1, G2, G3) für einzelne Meßbereiche zu vergleichen,
-   bei Überschreitung des größten Grenzwertes (G3) einen Überlastfehler zu signalisieren,
-   bei Unterschreitung der Grenzwerte (G1,G2,G3) Gültigkeit der Messung daran zu prüfen, ob der Differenzwert (E) des kleinsten von dem größten Meßwert in einem vorbestimmten Bereich liegt, dessen Bandbreite der Schwingung des mit einem bestimmten Gewicht belasteten Wiegetellers (6) entspricht, wobei die Messung ungültig ist, wenn der Differenzwert größer als die Bandbreite ist,
-   einen Wiegewert (W1) zu bilden, wobei nach der Prüfung der Gültigkeit der Messung eine Korrektur des Wiegewertes mit einem Offsetwert gemäß Parameter (P2) erfolgt, und wobei der Wiegewert (W1) aus der Summe aller Meßwerte nach Subtraktion mit dem Offsetwert und nach Division durch den ersten Parameter (P1) gebildet wird, sowie
-   mit einem Wertekorrekturfaktor eine Korrektur des Wiegewertes (W1) Parameter (P3) vor einer Übergabe des korrigierten Wiegewertes (W) an die Frankiermaschine durchzuführen.

**13.** Anordnung, nach Anspruch 12, **dadurch gekennzeichnet, daß** die Speicherzellen des vorgenannten Speicherbereiches als Schieberegister für den Mikroprozessor (21) verschaltet sind, daß der Mikroprozessor (21) programmiert ist, beim Eingang der Meßwerte eine Sortierung nach ihrer Größe vorzunehmen und in die entsprechend dafür vorgesehenen Stellen des vorgenannten Schieberegisters einzuspeichern, daß ein Meßzeitintervall endet, wenn eine Briefvorderkante von einem Sensor (S2) am Briefauslauf erkannt wird, daß in den Speicherbereichen des nichtflüchtigen Speichers (23) ein Parametersatz mit Anfangswerten und Parametern (P1,P2,P3, G1,G2,G3, A1,A2,A3,N) für die Auswertung der Meßwerte gespeichert ist.

**14.** Anordnung, nach Anspruch 13, **dadurch gekennzeichnet, daß** der Mikroprozessor (21) programmiert ist, daß bei einer ungenauen Messung, ein plausibler Gewichtswert anstelle des tätsächlichen Gewichtswertes gesetzt wird, wobei der plausible Gewichtswert höher als der tätsächliche Gewichtswert ist.

**15.** Anordnung, nach Anspruch 11, **dadurch gekennzeichnet, daß** der Wiegeteller (6) nahe seines Schwerpunktes mit der Wiegezelle (7) mechanisch gekoppelt ist, daß die mit der Steuerung (20) der Waage verbundenen zwei Sensoren (S1 und S2) stromauf/abwärts des Wiegetellers (6) angeordnet sind, daß der Encoder (50) mit der Steuerung (20) verbunden ist, welcher an einen Motor (49) mechanisch gekoppelt ist, wobei der Motor (49) von der Steuerung (20) mit einer Betriebsspannung versorgt wird und über eine Antriebsrolle (485) einen Transportriemen (41) antreibt, welcher sich im Bereich des Wiegetellers (6) auf einer Stützplatte (46) abstützt.

**16.** Anordnung, nach einem der Ansprüche 11 bis 15, **dadurch gekennzeichnet, daß** mittels des Encoders (50) oder eines geeigneten anderen Sensors zu jeder Zeit die Transportgeschwindigkeit gemessen und vom Mikroprozessor (21) ein Parametersatz für die Auswertung des Wiegemeßergebnisses ausgewählt oder durch Interpolation erzeugt wird, der einem aus einer Vielzahl an Transportgeschwindigkeitsbereichen entspricht.

**17.** Anordnung, nach Anspruch 15, **dadurch gekennzeichnet, daß** die Transporteinrichtung (4) mit einem umschaltbaren Antrieb (49, 44, 485) und die Steuerung (20) einen Treiber (26) umfaßt, der zwischen Antrieb und der Steuerung (20) geschaltet ist.

**Claims**

1. A method for determining a weight by means of a dynamic scale, with a control of the transport device, with a delivery of weighing values and with an evaluation of the measuring values transmitted by a weighing cell in a control unit of the scale, **characterized by** a selection (102) of a mean measuring value ($M_m$) for comparison with at least one excessive weight limit value (G1, G2, G3) with regard to a check for absence of excessive weight; and by the forming (104) of a decision parameter (E) for comparison with at least one switch-off criterion (A1, A2, A3) with regard to a check for validity of the measuring values transmitted by the weighing cell.

2. A method according to claim 1, **characterized by** the steps:

   - sorting (102) of the measuring values by their size during the measuring time interval (T1) before selecting a mean measuring value ($M_m$);
   - forming (104) of the decision parameter (E) from a difference of sorted measuring values;
   - determination (105), during the computing time interval (T2), that the mean measuring value ($M_m$) of the sorted measuring values is within certain limits (G1, G2, G3);
   - further processing (106) of the valid measuring values, the latter being valid if the decision parameter (E) does not exceed the bandwidth of the switch-off criteria (A1, A2, A3); and
   - output (107) of a corrected weight value W.

3. A method according to claims 1 and 2, **characterized in that**, during the measuring time interval (T1), measuring values are continuously sent by the weighing cell (7) and stored by their size in a memory area of a memory controlled by a microprocessor; and that the decision parameter (E) is formed by taking, from the memory area of the memory, the first (M1) and the last measuring value (M14) as to their size and subtracting both values from one another.

4. A method according to claims 1 to 3, **characterized in that** the above-mentioned difference (E) is temporarily stored during the computing time interval (T2) and is used for the examination as to measuring errors that is carried out according to switch-off criterion (A1, A2, A3), wherein the difference (E) for valid measuring values is not higher than the third inquiry criterion (A3); that the control unit of the dynamic scale, depending on the evaluation of the weight measurement as to valid measuring values, either allows the transport of the postal item downstream to the franking machine or causes a switch-over to subsequent weighing if the difference (E) exceeds the bandwidth of the switch-off criteria (A1, A2, A3).

5. A method according to claim 4, **characterized in that**, in inquiry steps (106-1, 106-2, 106-3), the difference (E) is compared with a value (A1, A2 and A3) as switch-off criterion, the measuring values being invalid if the difference (E) is higher than the respective switch-off criterion (A1, A2 or A3) and the measuring values being valid if the difference (E) is within the bandwidth of the respective switch-off criterion (A1, A2 or A3).

6. A method according to claims 1 and 2, **characterized in that**, for an examination as to the existence of excessive weight, the mean measuring value ($M_m$) is read out of the memory and then is compared with a limit value each (G3, G1 and G2) for certain weight classes in inquiry steps (105-1, 105-2, 105-3).

7. A method according to claim 6, **characterized in that** excessive weight is detected if the mean measuring value (M7) is higher than the third limit vale (G3) of an upper weight class.

8. A method according to claim 2, **characterized in that** the sorted measuring values are stored in a memory, a first parameter (P1) defining the number of memory cells in the memory for the measuring values; that, after checking the validity of the measurement, the weighing value is corrected by means of an offset value and a value correction coefficient, wherein the correction of the value is done on the basis of an offset value that is the product of the value of the difference (E) with the parameter (P2) for the offset coefficient of the measuring values supplied by the weighing cell and on the basis of a third parameter (P3) that is multiplied as value correction coefficient with a weighing value (W1), said weighing value (W1) being formed from the sum of all measuring values after subtraction with the offset value and after division by the first parameter (P1).

9. A method according to claim 1, **characterized in that** a weight measuring value corresponding to the weight of the postal item is determined; that the transport speed is measured at any time by means of an appropriate sensor; and that a parameter set according to one out of a plurality of transport speed ranges is defined for the evaluation of the weight measuring result.

10. A method according to claim 9, **characterized by** an interpolation of parameter sets in case of intermediate speeds for an even better adjustment.

11. An arrangement for determining a weight by means of a dynamic scale having a transport device (4), a weighing plate (6), a weighing cell (7), sensors (S1, S2, 50) and an electronic control unit (20) which, apart from controlling the transport device, performs an evaluation of the measuring values transmitted by the weighing cell and the output of a corrected weight value via an interface (25) to a franking machine, **characterized in that** the control unit (20) includes a non-volatile memory (23) connected with a microprocessor (21) for storing a number of parameters for the operation of the scale, a program memory (22) and random access memory (27), wherein a first parameter (P1) determines the number of positions of storage cells in the latter random access memory (27); that weighing cell (7) and control unit (20) are connected and measuring values are continuously supplied by the weighing cell (7) and stored in a memory area of the random access memory (27) of the control unit (20); and that the microprocessor is programmed for performing a check for absence of excessive weight by choosing a mean measuring value ($M_m$) for comparison with at least one excessive weight limit value (G1, G2, G3) and a check for validity of the measuring value transmitted by the weighing cell (7) by forming (104) a decision parameter (E) for comparison with at least one switch-off criterion (A1, A2, A3).

12. An arrangement according to claim 11, **characterized in that** the microprocessor is programmed for

   - sorting the measuring values, when they are received, by their size and storing them in the respectively provided memory cells until a measuring time interval (T1) ends;
   - evaluating the measuring values sorted by size in a computing time interval (T2) by first choosing a mean measuring value (M7) and comparing it with the limit values (G1, G2, G3) for the individual measuring ranges;
   - signalling an excessive-weight error when the highest limit value (G3) is exceeded;
   - checking, when falling short of the limit values (G1, G2, G3), the validity of the measurement by determining whether the difference value (E) between the lowest and the highest measuring value is within a predetermined range the bandwidth of which corresponds to the oscillation of the weighing plate (6) loaded with a certain weight, the measurement being invalid when the differential value is higher than the bandwidth;
   - forming a weighing value (W1), wherein, after verifying the validity of the measurement, the weighing value is corrected by means of an offset value according to parameter (P2), and wherein the weighing value (W1) is formed from the sum of all measuring values after subtraction with the offset value and after division by the first parameter (P1); as well as
   - correcting by means of a value correction coefficient the weighing value (W1) parameter (P3) before the corrected weighing value (W1) is supplied to the franking machine.

13. An arrangement according to claim 12, **characterized in that** the memory cells of the above-mentioned memory area are connected as shift register for the microprocessor (21); that the microprocessor (21) is programmed for sorting the measuring values, when they are received, by their size and storing them in the places of the shift register respectively provided for that purpose; that a measuring time interval ends when a front edge of a letter is detected by a sensor (S2) in the letter outlet; and that a parameter set with initial values and parameters (P1, P2, P3, G1, G2, G3, A1, A2, A3, N) for the evaluation of the measuring values is stored in the memory areas of the non-volatile memory (23).

14. An arrangement according to claim 13, **characterized in that** the microprocessor (21) is programmed in such a manner that, in case of an inaccurate measurement, a plausible weight value is put in the place of the actual weight value, such plausible weight value being higher than the actual weight value.

15. An arrangement according to claim 11, **characterized in that** the weighing plate (6) is mechanically coupled to the weighing cell (7) near its centre of gravity; that the two sensors (S1 and S2) connected with the control unit (20) of the scale are arranged upstream/downstream the weighing plate (6); that the encoder (50) mechanically coupled to a motor (49) is connected with the control unit (20), wherein said motor (49) is supplied with an operating voltage by the control unit (20) and drives, via a driving roller (485), a transport belt (41) that is supported by a supporting plate (46) in the area of the weighing plate (6).

**16.** An arrangement according to any of the claims 11 to 15, **characterized in that** the transport speed is measured at any time by means of an encoder (50) or another appropriate sensor and that the microprocessor (21) either chooses or generates by interpolation a parameter set for the evaluation of the weighing result that corresponds to one out of a plurality of transport speed ranges.

**17.** An arrangement according to claim 15, **characterized in that** the transport device (4) is provided with a reversible drive (49, 44, 485) and the control unit (20) comprises a driver (26) that is connected between the drive and the control unit (20).

**Revendications**

**1.** Procédé de détermination d'un poids, avec une balance dynamique, avec une commande du dispositif de transport, avec un envoi de valeurs de pesage et avec une interprétation des valeurs mesurées retransmises par une cellule de pesage dans une unité de commande de la balance, **caractérisé par** une sélection (102) d'une valeur mesurée ($M_m$) centrée, en vue d'une comparaison avec au moins une valeur limite de surcharge (G1, G2, G3), quant au contrôle effectué sur la liberté de surcharge et, **caractérisé par** la formation (104) d'un paramètre de décision (E), en vue d'une comparaison avec au moins un critère de déclenchement (A1, A2, A3), quant à un contrôle effectué sur la validité des valeurs mesurées retransmises par la cellule de pesage.

**2.** Procédé, selon la spécification 1, **caractérisé par** les étapes suivantes :

- Classement (102) des valeurs mesurées selon leur grandeur dans un intervalle de temps de comptage (T1) avant la sélection d'une valeur mesurée ($M_m$) centrée,
- Formation (104) du paramètre de décision (E) à partir d'une différence de valeurs mesurées classées,
- Détermination (105) dans un intervalle de temps de calcul (T2) de la situation de la valeur mesurée ($M_m$) centrée à partir des valeurs mesurées classées dans des limites connues (G1, G2, G3),
- Traitement ultérieur (106) des valeurs mesurées admissibles, tandis que les dernières sont valables lorsque, le paramètre de décision (E) ne dépasse pas la largeur de bande des critères de déclenchement (A1, A2, A3) et
- Sortie (107) d'une valeur de charge W corrigée.

**3.** Procédé, selon les spécifications 1 et 2, **caractérisé en ce que**, dans un intervalle de temps de comptage (T1), une donnée continuelle des valeurs mesurées de la cellule de pesage (7) et leur enregistrement selon leur grandeur a lieu dans une zone de mémoire d'une unité de stockage sous la commande d'un microprocesseur et **en ce que**, le paramètre de décision (E) est formé, tandis que la première (M1) et la dernière valeur mesurée (M14) sont triées selon la grandeur dans la zone de mémoire de l'unité de stockage, puis les deux sont ensuite soustraites l'une de l'autre.

**4.** Procédé, selon les spécifications 1 à 3, **caractérisé en ce que**, la différence (E) prénommée est mémorisée temporairement dans l'intervalle de temps de calcul (T2) et intervient dans la vérification d'erreurs de mesurage, qui s'effectue au moyen de critères de déclenchement (A1, A2, A3), tandis que la différence (E) n'est pas, pour des valeurs mesurées admissibles, plus grande que le troisième critère d'interrogation (A3), **en ce que**, l'unité de commande de la balance dynamique, dépendamment de l'interprétation du mesurage de poids pour des valeurs mesurées admissibles, permet le transport des envois postaux en aval vers la machine à affranchir le courrier ou effectue un changement de marche pour une vérification de poids lorsque, la différence (E) dépasse la largeur de bande des critères de déclenchement (A1, A2, A3).

**5.** Procédé, selon la spécification 4, **caractérisé en ce que**, la différence (E), dans les étapes d'interrogation (106-1, 106-2, 106-3), est comparée avec une valeur (A1, A2 et A3) comme critère de déclenchement, tandis que, lorsque la différence (E) est plus élevée que chacun des critères de déclenchement (A1, A2 ou A3), les valeurs mesurées ne sont pas admissibles et, les valeurs mesurées sont admissibles, lorsque la différence (E) se trouve à l'intérieur de la largeur de bande de chacun des critères de déclenchement (A1, A2 ou A3).

**6.** Procédé, selon les spécifications 1 et 2, **caractérisé en ce que**, la valeur mesurée ($M_m$) centrée est sélectionnée dans l'unité de stockage pour la vérification de la présence d'une surcharge, et puis comparée dans les étapes d'interrogation (105-1, 105-2, 105-3) avec à chaque fois une valeur limite (G3, G1 et G2) pour des classes de poids déterminées.

**7.** Procédé Dispositif, selon la spécification 6, **caractérisé en ce qu'**une surcharge est déterminée lorsque, la valeur mesurée (M7) centrée est plus élevée que la troisième valeur limite (G3) d'une classe de poids supérieure.

**8.** Procédé, selon la spécification 2, **caractérisé en ce que**, les valeurs mesurées classées sont mémorisées dans une unité de stockage, tandis qu'un premier paramètre (P1) fixe à l'avance le nombre de positions aux cellules de mémoire dans l'unité de stockage pour les valeurs mesurées, **en ce qu'**une correction de la valeur de pesage est effectuée avec une valeur offset et un coefficient de correction de valeur après un contrôle de la validité du mesurage, tandis que la correction des valeurs au moyen d'une valeur offset, qui ressort comme produit de la valeur de la différence (E) avec le paramètre (P2) pour le coefficient offset des valeurs mesurées indiquées par la cellule de pesage et, se produit au moyen d'un troisième paramètre (P3), qui est multiplié comme un coefficient de correction de valeur avec une valeur de pesage (W1), tandis que la valeur de pesage (W1) est formée à partir de la somme de toutes les valeurs mesurées après soustraction de la valeur offset et après division par le premier paramètre (P1).

**9.** Procédé, selon la spécification 1, **caractérisé en ce qu'**une valeur mesurée de pesage correspondante détermine le poids de l'envoi postal, **en ce que** la vitesse de transport est mesurée à chaque instant grâce à un détecteur approprié et qu'un ensemble de paramètres est fixé à l'avance, correspondant à un d'une multitude, aux zones de vitesse de transport pour l'interprétation des résultats de mesure de poids.

**10.** Procédé, selon la spécification 9, est **caractérisé par** une interpolation d'ensembles de paramètres, lors de vitesses intermédiaires, pour une adaptation encore meilleure.

**11.** Dispositif de détermination d'un poids, avec une balance dynamique, avec une installation de transport (4), un plateau de pesage (6), une cellule de pesage (7), des détecteurs (S1, S2, 50) et avec une unité de commande électronique (20), laquelle effectue, à côté d'une commande du dispositif de transport, une interprétation des valeurs mesurées retransmises par la cellule de pesage ainsi que la sortie d'une valeur de poids corrigée à une machine à affranchir le courrier par une interface (25), **caractérisé en ce que**, l'unité de commande (20) comprend une unité de stockage (23) non-volatile, connectée avec un microprocesseur (21), en vue de la sauvegarde d'un nombre de paramètres pour le fonctionnement de la balance, une horloge programmatrice (22) et une mémoire de travail (27), tandis qu'un premier paramètre (P1) détermine le nombre des positions aux emplacements de mémoire dans la dernière mémoire de travail (27), **en ce que** la cellule de pesage (7) et l'unité de commande (20) sont connectées entre-elles, tandis qu'une donnée continuelle de valeurs mesurées de la cellule de pesage (7) a lieu ainsi que leur sauvegarde dans une zone de mémoire de la mémoire de travail (27) de l'unité de commande (20), et **en ce que** le microprocesseur est programmé de telle manière qu'un contrôle sur la liberté de surcharge doit être entrepris à travers une sélection d'une valeur mesurée ($M_m$) centrée, en vue d'une comparaison avec au moins une valeur limite de surcharge (G1, G2, G3) ainsi qu'un contrôle sur la validité des valeurs mesurées retransmises par la cellule de pesage (7) à travers une formation (104) d'un paramètre de décision (E), en vue d'une comparaison avec au moins un critère de déclenchement (A1, A2, A3).

**12.** Dispositif, selon la spécification 11, **caractérisé en ce que**, le microprocesseur est programmé, si bien que,

- lors de l'entrée des valeurs mesurées, un classement selon leur grandeur doit être prévu et sauvegardé de manière conforme dans les cellules de mémoire prévues à cet effet jusqu'à ce qu'un intervalle de temps de comptage (T1) se termine
- tout d'abord, en vue de l'interprétation des valeurs mesurées classées par ordre de grandeur dans un intervalle de temps de calcul (T2), une valeur mesurée (M7) centrée doit être sélectionnée et comparée avec les valeurs limites (G1, G2, G3) pour chacun des champs de mesure,
- une erreur de surcharge doit être signalée, lors d'un dépassement de la valeur limite (G3) la plus élevée,
- il doit être vérifié, quant à la validité du mesurage, lors d'un dépassement des valeurs limites (G1, G2, G3), si, la valeur différentielle (E) de la plus petite de la plus grande valeur mesurée se trouve dans un domaine prédéterminé, auquel correspond une largeur de bande de la vibration du plateau de pesage (6) chargé avec un poids déterminé, tandis que le mesurage n'est pas admissible, lorsque la valeur différentielle est supérieure à la largeur de bande,
- une valeur de pesage (W1) doit figurée, tandis que, après le contrôle de la validité du mesurage, une correction de la valeur de pesage s'effectue avec une valeur offset conformément à un paramètre (P2), et tandis que la valeur de pesage (W1) est formée à partir de la somme de toutes les valeurs mesurées après soustraction de la valeur offset et après division par le premier paramètre (P1), ainsi que
- une correction de la valeur de pesage (W1) doit être entreprise avec un coefficient de correction de valeur du paramètre (P3) avant le transfert de la valeur de pesage (W) corrigée à la machine à affranchir le courrier.

13. Dispositif, selon la spécification 12, **caractérisé en ce que**, les cellules de mémoire de la zone de mémoire prénommée sont câblées comme un registre à décalage pour le microprocesseur (21), **en ce que** le microprocesseur (21) est programmé, si bien que, lors de l'entrée des valeurs mesurées, un classement selon leur grandeur doit être prévu et sauvegardé de manière conforme dans les positions prévues à cet effet du registre à décalage prénommé, **en ce qu'**un intervalle de temps de comptage se termine, lorsqu'un bord avant d'un courrier est identifié par un détecteur (S2) à la sortie du courrier, **en ce qu'**un ensemble de paramètres est mémorisé dans les zones de mémoire de l'unité de stockage (23) non-volatile avec des valeurs initiales et des paramètres (P1, P2, P3, G1, G2, G3, A1, A2, A3, N) pour l'interprétation des valeurs mesurées.

14. Dispositif, selon la spécification 13, **caractérisé en ce que**, le microprocesseur (21) est programmé, **en ce qu'**une valeur de pesage vraisemblable est utilisée, lors d'un mesurage imprécis, à la place de la valeur de pesage réelle, tandis que la valeur de pesage vraisemblable est plus élevée que la valeur de pesage réelle.

15. Dispositif, selon la spécification 11, **caractérisé en ce que**, le plateau de pesage (6), près de son centre de gravité, est couplé mécaniquement avec la cellule de pesage (7), **en ce que** les deux détecteurs (S1 et S2) connectés avec la commande (20) de la balance sont disposés en amont/en aval du plateau de pesage (6), **en ce que** le codeur (50) est connecté avec la commande (20), lequel est couplé mécaniquement à un moteur (49), tandis que le moteur (49) est alimenté par la commande (20) avec une tension du secteur et actionne par un rouleau moteur (485) une courroie transporteuse (41), laquelle s'appuie sur une plaque d'appui (46) dans la zone du plateau de pesage (6).

16. Dispositif, selon une des spécifications 11 à 15, **caractérisé en ce que**, la vitesse de transport peut être à tout moment mesurée grâce au codeur (50) ou à un autre détecteur approprié à cet effet et qu'un ensemble de paramètres est sélectionné par le microprocesseur (21) pour l'interprétation du résultat de mesure de pesée ou est généré par interpolation, qui correspond à un d'une multiplicité de domaines de vitesse de transport.

17. Dispositif, selon la spécification 15, **caractérisé en ce que**, le dispositif de transport (4) englobe avec un actionnement réversible (49, 44, 485) et la commande (20) un chassoir (26), qui est monté entre l'actionnement et la commande (20).

Fig. 1

EP 1 014 052 B1

Programm-
Speicher
(Betriebssoftware)  22

nichtflüchtiger
Speicher
(NVM)  RAM
27

23

20

21

µP

24
I/O

25
I/O

S1

26

S2

6

7

Wiegezelle

50
E

49
M

44

4, 48
Transporteinrichtung

485

487

481

**Fig. 2**

4  6  T1  T2 T3  10

S1  S2

POS1  POS2  POS3  POS4  POS5

**Fig. 3**

**Fig. 4**

**Fig. 5**

Fig. 6

**Fig. 7**

Fig. 8

Fig. 9

107

$$4$$

P1, P2, P3, N

Off.= E*P2    107-1

Summe
Werte=f(P1)    107-2

Wiegewert 1= (Summe Werte -N*Offset)/P1    107-3

Ergebnis = Wiegewert
1*P3    107-4

Übergabe
Wiegeergebnis    107-5

$$5$$

Fig. 10